# FASCICULE DE BREVET EUROPEEN

(11) **EP 1 572 475 B1**
(45) Date de publication et mention de la délivrance du brevet: **20.08.2008**
(21) Numéro de dépôt: 03785788.5
(22) Date de dépôt: 11.12.2003
(51) Int. Cl.: B60G 3/02, B60G 3/06, B60G 3/20, B62D 17/00, B60G 3/26

(54) **DISPOSITIF DE SUPPORT;UNE ROUE, DISPOSITIF DE SUSPENSION ET VEHICULE COMPRENANT LEDIT DISPOSITIF DE SUPPORT**
RADTRÄGER, RADAUFHÄNGUNG UND FAHRZEUG MIT EINEM SOLCHEN RADTRÄGER
WHEEL SUPPORT DEVICE, SUSPENSION DEVICE AND VEHICLE COMPRISING ONE SUCH SUPPORT DEVICE

(30) Priorité: 11.12.2002 FR 0215685
(43) Date de publication de la demande: 14.09.2005
(73) Titulaire: Société de Technologie Michelin, 63000 Clermont-Ferrand (FR); Michelin Recherche et Technique S.A., 1463 Granges-Paccot (CH)
(72) Inventeur: LEMINEUR, Vincent, F-63410 Manzat (FR); SERRA, Loic, F-63450 Tallende (FR); VERNIER, Davy, F-63000 Clermont-Ferrand (FR)
(74) Mandataire: Lasson, Cédric Y. M.
(86) Numéro de dépôt international: PCT/EP2003/014066
(87) Numéro de publication internationale: WO 2004/052666

(56) Documents cités:
- WO-A-01/72572
- FR-A- 2 806 693
- FR-A- 2 819 752

## Description

La présente invention concerne la liaison au sol des véhicules, en particulier les dispositifs de suspension, et plus particulièrement le guidage des roues.

La demande internationale WO 01/72572 qui forme l'état de la technique le plus proche selon le preambule de la revendication 1 décrit un dispositif de support de roue permettant un degré de liberté de carrossage de la roue par rapport aux éléments de suspension. Ce degré de liberté est contrôlé soit de manière active, par exemple par un vérin en fonctions de paramètres de roulage du véhicule, soit de manière passive par les efforts qui s'exercent sur la roue.

On appelle "plan de roue" le plan, lié à la roue, qui est perpendiculaire à l'axe de la roue et qui passe par le milieu du pneumatique. La position angulaire du plan de roue par rapport à la caisse du véhicule est définie par deux angles, l'angle de carrossage et l'angle de braquage. L'angle de carrossage d'une roue est l'angle qui sépare, dans un plan transversal perpendiculaire au sol, le plan de roue du plan médian du véhicule. Cet angle est positif lorsque la partie supérieure de la roue s'écarte du plan médian vers l'extérieur du véhicule, on parle alors couramment de "carrossage" ou de "carrossage positif ". A l'inverse, lorsque cet angle est négatif, on parle de "contre-carrossage" ou de "carrossage négatif". On emploiera indifféremment « carrossage » ou « angle de carrossage » par la suite.

L'angle de braquage d'une roue est l'angle qui sépare, dans un plan horizontal parallèle au sol, le plan de roue du plan médian du véhicule.

Le plan de carrossage est le plan dans lequel s'effectue le carrossage. C'est le plan vertical, transversal par rapport au véhicule et passant par le centre de l'aire de contact statique. Lorsque la roue a un angle de braquage nul, le plan de carrossage contient l'axe de la roue.

Dans la demande WO 01/72572, il est proposé, pour les systèmes passifs, que le centre instantané de rotation du mouvement de carrossage de la roue par rapport aux éléments de suspension soit situé sous le plan du sol afin que les efforts transversaux qui agissent dans l'aire de contact génèrent un couple tendant à incliner le plan de la roue dans le sens souhaité (ce centre instantané de rotation est désigné "premier centre instantané de rotation" dans le document WO 01/72572). Cependant, bien que les efforts transversaux génèrent, sous cette condition, un couple suivant l'axe de carrossage qui tend à incliner la roue dans le sens souhaité, l'efficacité en terme de variation de carrossage est très différente selon les configurations mises en oeuvre. Pourtant dans la pratique, la sensibilité du carrossage aux efforts dans l'aire de contact est un critère important. En effet, on recherche généralement à concevoir un système de support de roue et de suspension tel que la variation passive de carrossage soit prévisible, stable et satisfaisante en termes d'inclinaison maximale. Ceci est particulièrement important pour les véhicules très performants destinés en particulier à la compétition automobile. Pour ces véhicules, la recherche de la performance absolue passe par une optimisation de l'adhérence longitudinale et transversale. Cette optimisation n'est possible que si l'angle de carrossage de la roue est à tout moment proche de l'idéal pour le fonctionnement du pneumatique. Un carrossage idéal en matière d'adhérence du pneumatique est un carrossage permettant d'optimiser l'homogénéité de la répartition de pression dans l'aire de contact, c'est à dire permettant par exemple de compenser l'effet, sur la répartition de pression dans l'aire de contact, qu'ont les déformations latérales du pneumatique lorsqu'il est en dérive (typiquement au cours d'un virage).

Un objectif de l'invention est donc un dispositif de support de roue tel que décrit dans le document WO 01/72572 dont le fonctionnement passif soit amélioré.

L'invention propose pour cela un dispositif de support destiné à lier une roue à des éléments de suspension d'un véhicule, ladite roue de rayon 'R' étant destinée à reposer au sol, ledit dispositif de support comportant des biellettes articulées en leurs parties inférieures aux éléments de suspension et en leurs parties supérieures au porte-roue conférant à ladite roue un degré de liberté de carrossage par rapport aux dits éléments de suspension, le mouvement de carrossage s'effectuant dans le plan de carrossage autour d'un centre instantané de rotation, ledit dispositif étant caractérisé en ce qu'il est configuré en outre de manière à ce que, Y et Z étant respectivement les abscisse et ordonnée de la position instantanée dudit centre instantané de rotation dans le plan de carrossage, ladite position, au cours d'un débattement de carrossage de 0° à -1°, vérifie simultanément les conditions suivantes:
■ *Y≤*0.125**R*
■ *Z* ≤ -0.0625**R*
■ *Z* ≤ 0.66225 **Y*+0.02028**R*

De préférence, le dispositif de l'invention est configuré de manière à ce qu'en outre au cours d'un débattement de carrossage de 0° à -2°, de préférence encore de 0° à -3° et de préférence encore de 0° à -4°, la position du centre instantané de rotation vérifie aussi lesdites conditions.

De préférence encore, le dispositif de support de l'invention est configuré de manière à ce que la position dudit centre instantané de rotation, pour un carrossage nul, vérifie en outre simultanément les conditions suivantes:
■ -0.125 **R* ≤ *Y* ≤ 0.125**R,* de préférence encore -0.0625**R ≤ Y* ≤ 0.0625**R*
■ *Z* ≤ -0.0625**R*

De préférence encore, le dispositif de l'invention est configuré de manière à ce que la position dudit centre instantané de rotation, pour un carrossage de -1°, vérifie en outre la condition suivante:
■ *Z* ≤ 0.66225**Y* - 0.15**R*

De préférence encore, le dispositif de l'invention est configuré de manière à ce que la position dudit centre instantané de rotation, pour un carrossage de -2°, vérifie en outre la condition suivante:
■ *Z* ≤ 0.66225**Y* - 0.1625**R*

De préférence encore, le dispositif de l'invention est configuré de manière à ce que la position dudit centre instantané de rotation, pour un carrossage de -3°, vérifie en outre la condition suivante:
■ *Z*≤0.66225**Y*-0.1719**R*

De préférence encore, le dispositif de l'invention est configuré de manière à ce que la position dudit centre instantané de rotation, pour un carrossage de -4°, vérifie en outre la condition suivante:
■ Z≤0.66225**Y*-0.1844**R*

De préférence encore, le dispositif de l'invention est configuré de manière à ce que la position dudit centre instantané de rotation, pour un carrossage de -5°, vérifie en outre la condition suivante:
■ *Z* ≤ 0.66225**Y* - 0.1969**R*

En effet, il est apparu de manière surprenante que le déplacement du centre instantané de rotation au cours du mouvement de carrossage doit être contenu dans des limites d'autant plus réduites que la course de carrossage utile visée est importante.

Dans une variante de l'invention, le dispositif de support de l'invention est destiné à être lié à une jambe de force MacPherson.

De préférence, le dispositif de support de l'invention comporte en outre des moyens de contrôle aptes à influencer le carrossage de la roue, par exemple sous la forme d'un amortisseur et/ou d'un ressort.

Selon un mode de réalisation préféré de l'invention, la biellette intérieure est liée d'une part au porte-roue par une liaison pivot et d'autre part aux éléments de suspension par une liaison rotule.

L'invention concerne également un dispositif de suspension pour véhicule comprenant le dispositif de support décrit plus haut ainsi qu'un véhicule comprenant un tel dispositif de suspension.
La figure 1 représente en vue longitudinale plane le principe d'un dispositif de suspension selon l'invention.
La figure 2 représente en vue longitudinale plane le principe d'un dispositif de suspension selon l'invention lorsque le carrossage de la roue varie.
Les figures 3, 4, 5 et 6 représentent des exemples de configurations cinématiques d'un dispositif de support selon l'invention.
Les figures 7, 8 et 9 représentent un mode de réalisation d'un dispositif de suspension selon l'invention similaire à celui de la figure 1.
Les figures 10, 10a et 10b représentent un dispositif de suspension selon l'invention basé sur le principe de l'essieu brisé.
Les figures 11, 12, 13 représentent un mode de réalisation d'une variante du dispositif de suspension de la figure 10.
La figure 14 représente un mode de réalisation de l'invention basé sur le principe de l'essieu rigide.

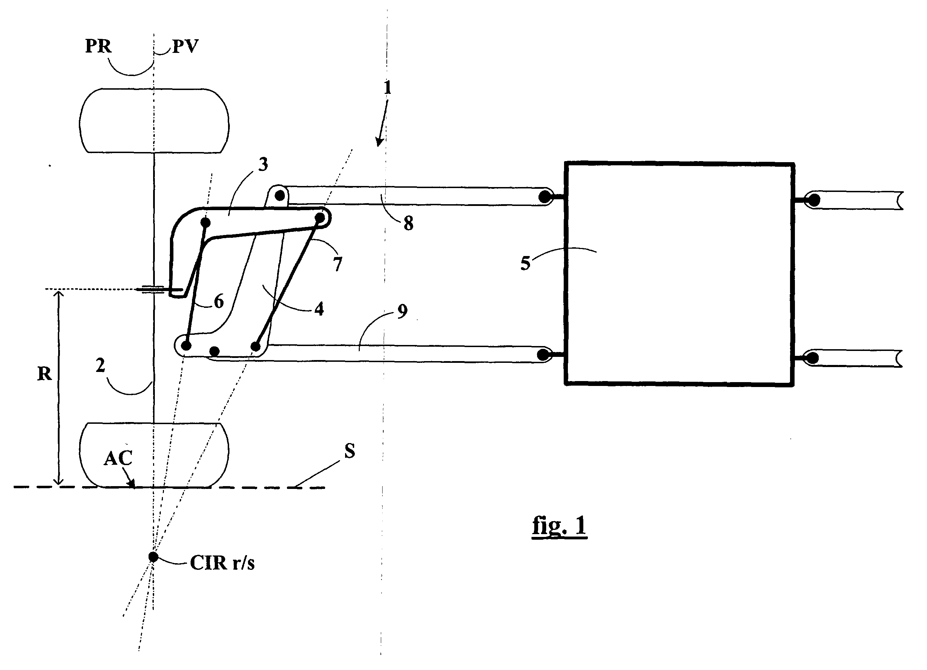

A la figure 1, on a représenté le dispositif de suspension 1 de l'invention. Celui-ci comprend différents éléments destinés à maintenir le plan PR d'une roue 2, par rapport à la caisse 5 d'un véhicule. La roue 2, de rayon « R », est en appui sur le sol S par l'intermédiaire de son aire de contact AC. Le rayon R (également appelé "rayon écrasé") est la distance entre le sol S et l'axe de la roue lorsque la roue est verticale et porte sa charge statique nominale de fonctionnement. Le porte-roue 3 est lié à la caisse 5 par des moyens (4, 6, 7 ,8 ,9) lui permettant deux degrés de liberté. Le mouvement de carrossage de la roue 2 est permis par une liaison du porte-roue 3 avec le support intermédiaire 4 par des biellettes pivotantes 6 et 7 articulées en leurs parties inférieures aux éléments de suspension (4, 8, 9) et en leurs parties supérieures au porte-roue 3. Le mouvement de débattement de suspension est permis par une liaison du support intermédiaire 4 avec la caisse 5 par des bras (ou des triangles) supérieur 8 et inférieur 9. Ainsi, le dispositif de suspension 1 est configuré de manière à conférer au porte-roue, par rapport à la caisse 5, d'une part un degré de liberté de carrossage puisque le porte-roue peut s'incliner par rapport à la caisse et d'autre part un degré de liberté de débattement de suspension puisque le porte-roue peut effectuer des mouvements sensiblement verticaux de façon connue en soi, par exemple à la manière des systèmes « multi-bras » ou « double triangle ». Le ressort de suspension ou tout autre dispositif permettant de porter la charge n'a pas été représenté ici.

Le dispositif de support comprend le porte-roue 3 et les moyens de carrossage (biellettes 6 et 7). C'est le dispositif de support qui permet la variation de carrossage de la roue par rapport aux moyens de suspension.

Le mouvement de carrossage du porte-roue 3 par rapport au support intermédiaire 4 admet un centre instantané de rotation (CIR r/s). La position de ce centre instantané de rotation est déterminée par l'intersection des axes des biellettes 6 et 7 qui lient le porte-roue 3 au support intermédiaire 4. La figure 1 représente le dispositif de suspension dans une position moyenne correspondant à la position statique du dispositif de suspension lorsque le véhicule porte sa charge nominale sur un sol plat. Le carrossage statique est ici représenté sensiblement nul, c'est à dire que le plan de roue PR correspond au plan vertical PV passant par le centre de l'aire de contact AC et parallèle au plan médian du véhicule. Le dispositif de suspension 1 comprend le dispositif de support de l'invention.

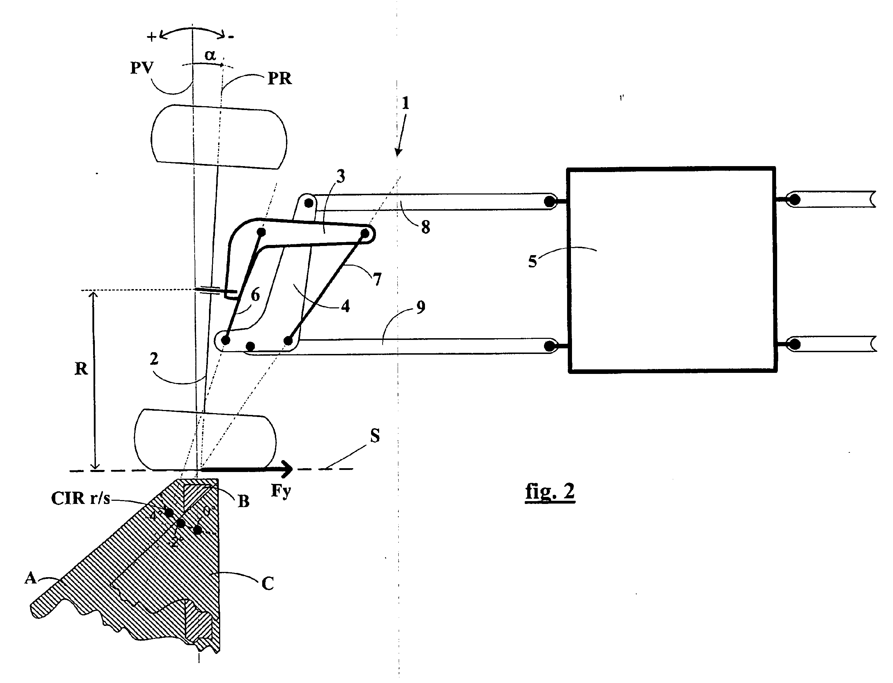

La figure 2 représente le mode de réalisation de la figure 1 lorsque la roue 2 adopte un angle de carrossage α négatif (contre-carrossage). En effet, le plan de roue PR est incliné vers l'intérieur du véhicule d'un angle α par rapport au plan vertical de référence PV. Cette inclinaison peut être occasionnée par un effort transversal Fy appliqué dans l'aire de contact AC et orienté vers l'intérieur du véhicule. C'est le cas de la roue qui se trouve du côté extérieur au virage lorsque le véhicule suit une trajectoire courbe. Au contraire, lorsque la roue est soumise à un effort dont la composante transversale est orientée vers l'extérieur du véhicule (c'est le cas de la roue qui se trouve du côté intérieur au virage) la composante Fy génère alors un couple qui tend à faire pivoter le porte-roue dans le sens d'une augmentation de carrossage (c'est à dire que l'angle de carrossage α augmente, il tend alors vers des valeurs positives).

Les mouvements de carrossage du porte-roue peuvent également être "simulés" c'est à dire imposés par des efforts appliqués sur la roue ou directement sur le porte-roue 3 alors que le support intermédiaire 4 est maintenu fixe par rapport à la caisse 5 et par rapport au sol S. On peut ainsi contrôler, mesurer, analyser le fonctionnement cinématique du système.

Le centre instantané dé rotation (CIR r/s) est le point d'intersection des axes des biellettes (6, 7) qui définissent la cinématique des mouvements du porte-roue 3 par rapport au support intermédiaire 4. La position de ce point est variable lors des mouvements de carrossage du porte-roue comme on le voit en comparant les figures 1 et 2. On a représenté en pointillé le déplacement, l'évolution de la position du centre instantané de rotation (CIR r/s) au cours du débattement de carrossage. Selon une caractéristique essentielle de l'invention, le dispositif de support est configuré de manière à ce que l'évolution du centre instantané de rotation soit contenue dans une partie bien définie du plan de carrossage. Cette partie A du plan de carrossage est encadrée par trois droites. En fait, cette partie A du plan est un secteur tronqué du plan de carrossage. Dans la suite de la présente description, on désignera une telle partie du plan par le terme "secteur". Un secteur donné est donc une partie du plan de carrossage dans laquelle doit être situé, selon l'invention, le centre instantané de rotation au cours d'un débattement de carrossage donné.

Le premier secteur A représente schématiquement la zone du plan de carrossage dans laquelle doit être situé, selon l'invention, le centre instantané de rotation au cours d'un débattement de carrossage de 0° à -1 °.

Si le dispositif est conçu pour avoir un débattement de carrossage utile couvrant au moins l'intervalle de 0° à -2°, le premier secteur A est également la partie du plan de carrossage dans laquelle doit être situé, de préférence, le centre instantané de rotation au cours d'un débattement de carrossage de 0° à -2°.

Si le dispositif est conçu pour avoir un débattement de carrossage utile couvrant au moins l'intervalle de 0° à -3°, le premier secteur A est également la partie du plan de carrossage dans laquelle doit être situé, de préférence encore, le centre instantané de rotation au cours d'un débattement de carrossage de 0° à - 3°.

Si le dispositif est conçu pour avoir un débattement de carrossage utile couvrant au moins l'intervalle de 0° à - 4°, le premier secteur A est également la partie du plan de carrossage dans laquelle doit être situé, de préférence encore, le centre instantané de rotation au cours d'un débattement de carrossage de 0° à - 4°.

On a également représenté la figure 2 une zone B. Cette-zone B correspond à la partie du plan de carrossage où doit se situer de préférence le centre instantané de rotation lorsque le carrossage est nul (α = 0). Bien sûr la zone B est incluse dans le secteur A puisque la position de carrossage nul est l'une des positions successives prises par la roue dans les débattements de carrossage envisagés plus haut.

On a également représenté à la figure 2 un deuxième secteur C. Ce secteur C correspond à la partie du plan de carrossage où doit se situer de préférence le centre instantané de rotation pour un angle de contre-carrossage donné. Selon l'invention, plus le contre-carrossage utile visé est important, plus le critère concernant la position correspondante du centre instantané de rotation est restrictif. Ainsi, le deuxième secteur C pour un contre-carrossage de - 5° est compris dans le deuxième secteur C pour un contre-carrossage de - 4° qui lui-même est compris dans le deuxième secteur C pour un contre-carrossage de - 3° et ainsi de suite jusqu'au deuxième secteur C pour un contre-carrossage de- 1° qui est le plus étendu.

Sur la figure 2, le deuxième secteur C est par exemple celui correspondant à un contre-carrossage de - 2° (α = - 2°) et le déplacement du centre instantané de rotation représenté sur cette figure correspond à un débattement de carrossage de 0° à - 4° (α = - 4°). On constate que l'ensemble de l'évolution du centre instantané de rotation est contenu dans le premier secteur (A), la position correspondant au carrossage nul (α = 0) est contenue dans la zone B et la position du centre instantané de rotation lorsque le carrossage vaut - 2° est contenue dans le deuxième secteur (C) représenté.

Ce mode de représentation graphique permet de bien visualiser la signification des caractéristiques concernant l'évolution des différentes positions du centre instantané de rotation. Cette représentation est tout à fait équivalente aux critères employés dans les revendications de la présente demande et qui sont exprimés sous la forme de conditions sur les coordonnées cartésiennes (horizontales Y et verticales Z) du centre instantané de rotation dans le plan de carrossage.

Les différents secteurs et zone sont ouverts, c'est à dire qu'ils s'étendent à l'infini (sous le sol). En conséquence, plus le centre instantané de rotation d'une configuration est éloigné sous le sol, plus l'évolution acceptable, selon les critères exposés précédemment, peut être importante. Cependant, des critères secondaires comme par exemple la variation de voie ou de demi-voie, l'encombrement ou la masse du système dissuadent l'homme du métier de choisir des configurations où le centre instantané de rotation est trop éloigné du sol.

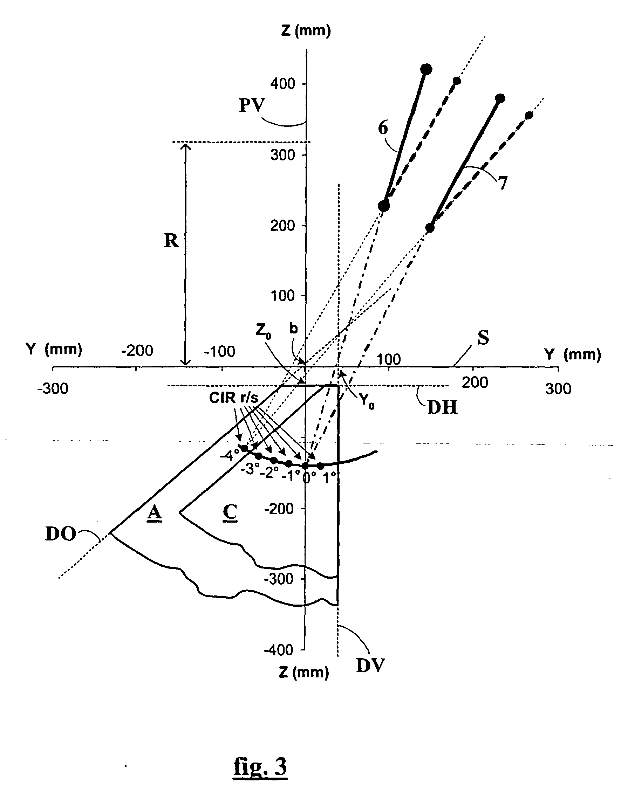

La figure 3 représente, dans le plan de carrossage, le repère orthogonal (Y-Y, Z-Z) utilisé pour caractériser l'invention. Ce repère est centré d'une part sur le plan vertical PV (équivalent au plan de roue PR lorsque ce dernier est vertical, voir figure 1) et d'autre part sur le plan horizontal du sol S. L'abscisse Y correspond donc à la position horizontale par rapport au plan de référence PV et l'ordonnée Z correspond à la position verticale par rapport au sol S. L'abscisse Y est positive vers l'intérieur du véhicule et négative vers l'extérieur. L'ordonnée Z est positive lorsque le point considéré se situe au dessus du sol S et négative lorsqu'il se situe en dessous. Les axes sont gradués en millimètres. Dans ce repère, on peut porter les profils des biellettes 6 et 7. Les biellettes sont articulées en leur partie inférieure aux éléments de suspension (non représentés) et en leur partie supérieure au porte-roue (non représenté). Comme on l'a vu plus haut, le mouvement de la partie supérieure des biellettes crée le degré de liberté de carrossage du porte-roue par rapport aux éléments de suspension. Le mouvement de carrossage du porte-roue a lieu autour du centre instantané de rotation (CIR r/s) dont la position évolue à chaque instant au cours du mouvement de carrossage. La position du centre instantané de rotation correspond donc, tout au long du mouvement de carrossage, à des coordonnées Y et Z variables. Cette variation dépend de la position et de l'orientation des biellettes dans le plan de carrossage. Ce graphique (au même titre que les figures 1 et 2) peut représenter une vue de derrière de la partie gauche de la suspension d'un véhicule. L'intérieur du véhicule se trouve donc à droite de la figure et l'extérieur se trouve à gauche. Sur la figure 3, on a représenté la courbe d'évolution du centre instantané de rotation. On a porté sur cette courbe les points correspondant à la position du centre instantané de rotation pour un angle de carrossage de 1°, 0°, - 1°, - 2°, - 3°, - 4°. Les positions des biellettes 6 et 7 sont représentées en trait continu pour 0° de carrossage et en pointillé pour - 4° de carrossage.

Dans cette représentation, le secteur A est la partie du plan de carrossage délimitée par les droites DH, DV et DO. La droite DH contient tous les points tels que Z = Z₀. La droite DV contient tous les points tels que Y = Y₀. La droite oblique DO contient tous les points tels que Z = aY + b, "a" étant la pente de DO et "b" étant l'ordonnée à l'origine. Le secteur A peut donc être défini par les inégalités suivantes:
■ *Y* ≤ *Y*₀
■ Z ≤*Z*₀
■ *Z*≤*aY*+*b*

selon l'invention, le centre instantané de rotation se situe dans le secteur A tout au long d'un débattement de carrossage de 0° à -1° et de préférence -2°, -3°, - 4°. Cependant, si le débattement effectif du dispositif est limité par une butée de course ou une contrainte constructive de même effet, la configuration géométrique de base du dispositif de support (en particulier la position et l'orientation des biellettes) doit selon l'invention satisfaire tout de même aux conditions exprimées par le secteur A, c'est à dire que le débattement considéré peut être en partie théorique, virtuel.

De préférence, le dispositif de l'invention est configuré de façon à ce que lorsque le carrossage est nul (α = 0), le centre instantané de rotation se situe dans la zone B (non représentée sur cette figure par souci de clarté).

De préférence encore, le centre instantané de rotation se trouve à une distance inférieure 0.9375* R sous le sol lorsque la roue est verticale et porte sa charge statique nominale de fonctionnement. Cette caractéristique préférée peut également s'exprimer sous la forme d'une inégalité vis à vis de l'ordonnée Z lorsque le carrossage est nul (α = 0) : Z ≥ -0.9375 * *R*.

On a représenté sur la figure 3 le deuxième secteur (C) dans lequel doit de préférence se situer le centre instantané de rotation lorsque le carrossage vaut par exemple - 4°.

Comme le critère exprimé par le secteur C correspond à une caractéristique préférentielle supplémentaire par rapport au critère exprimé par le secteur A, le deuxième secteur C est naturellement compris dans le premier secteur A.

La zone B et le secteur C définissent des zones du plan de carrossage correspondant à des coordonnées Y et Z telles qu'elle vérifient des conditions différentes et supplémentaires par rapport à celles décrites plus haut pour le secteur A.

L'exemple de la figure 3 concerne un système dont les biellettes 6 et 7 ont chacune un entraxe (c'est à dire une distance dans le plan de carrossage entre l'axe d'articulation inférieur et l'axe d'articulation supérieur) d'environ 200 mm. On constate sur le graphique que cette configuration vérifie les critères concernant l'évolution de 0° à - 4° (secteur A) ainsi que les critères concernant la position de carrossage nul (secteur B). En revanche, cette configuration particulière ne satisfait pas les critères (représentes par le second secteur C) concernant la position ponctuelle correspondant à un contre-carrossage de - 4° mais seulement pour - 3°. Bien sûr, du fait que les critères correspondant au deuxième secteur (C) sont d'autant plus restrictifs que le contre-carrossage concerné est important (voir plus haut la description de la figure 2), les critères concernant la position du centre instantané de rotation pour un contre-carrossage de - 2° et - 1° sont ici également satisfaits.

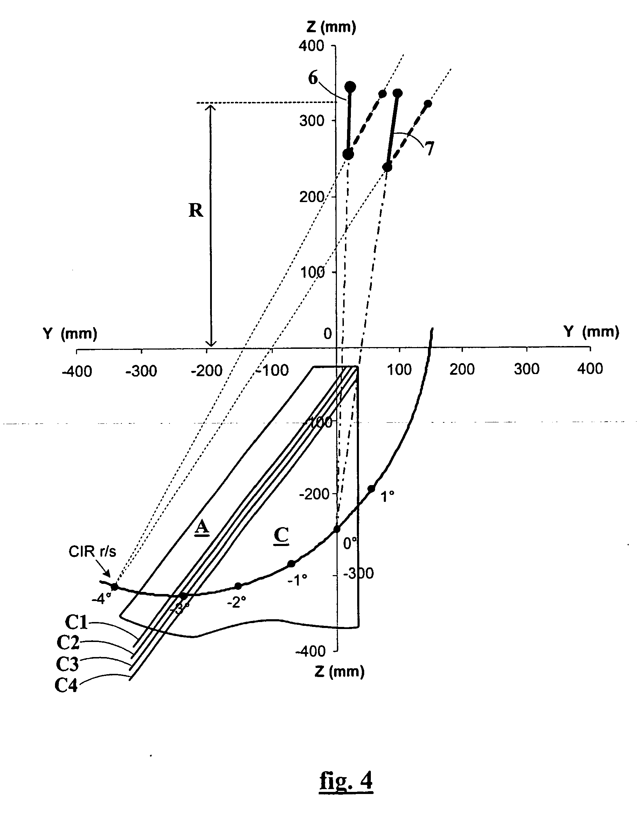

La figure 4 représente une autre configuration du dispositif de support de l'invention basé sur des biellettes 6 et 7 plus courtes (environ 100 mm), et un centre instantané de rotation situé, pour un carrossage nul, à une plus grande distance sous le sol S (environ 250 mm). Cette configuration particulière donne une variation plus importante de la position du centre instantané de rotation. De plus, cette variation est très asymétrique par rapport à la position moyenne. En effet, la partie gauche de la courbe d'évolution (c'est à dire celle correspondant à un carrossage négatif) montre que le centre instantané de rotation s'écarte du niveau du sol lorsque la roue s'incline dans le sens du contre-carrossage (au moins pour un angle de carrossage entre 0 et -3°). Au contraire, la partie droite de la courbe (carrossage positif) montre que le centre instantané de rotation se rapproche rapidement du niveau du sol lorsque la roue s'incline dans le sens du carrossage. Cette configuration très différente de la précédente satisfait pourtant le critère représenté par le secteur A identique au secteur A de la figure 3.

On a représenté également schématiquement les limites C1, C2, C3 et C4 des secteurs C correspondant aux critères de position du centre instantané de rotation pour des angles de contre-carrossage respectivement de -1°, -2°, -3° et - 4°.La configuration représentée satisfait au critère correspondant à la limite C1 puisque la position du centre instantané de rotation pour un carrossage de -1° est comprise dans le secteur C limité par C1. De même pour un angle de -2°, la position correspondante est située dans le secteur C limité par C2. En revanche, dans cet exemple les positions pour un carrossage de -3°, -4° et à fortiori -5°(non représenté) ne sont pas contenus dans les secteurs C correspondants.

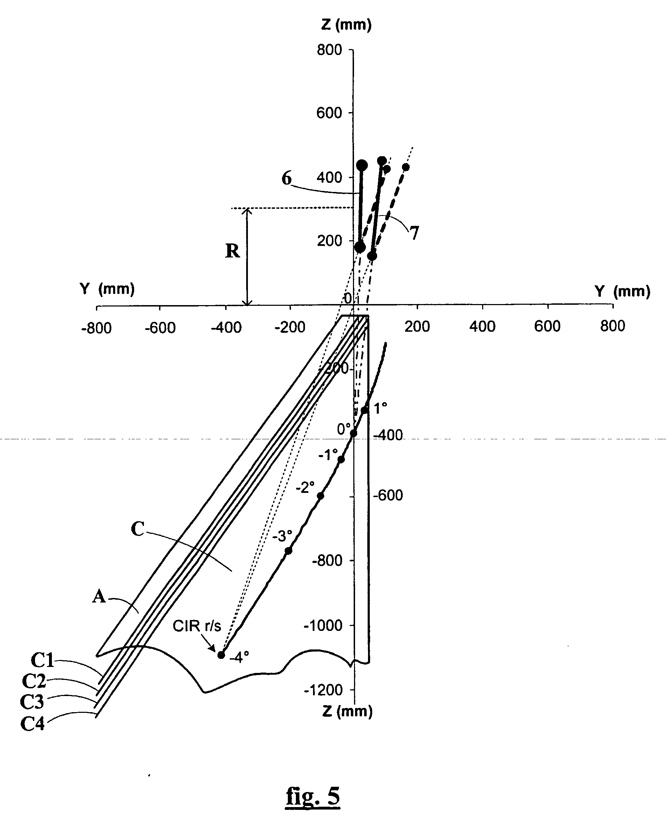

La figure 5 représente encore une autre configuration du dispositif de support de l'invention basée sur des biellettes 6 et 7 relativement longues (respectivement environ 250 et 300 mm d'entraxe) et un centre instantané de rotation, pour un carrossage nul, situé à une distance sous le sol S encore plus grande (environ 400 mm). Cette configuration donne une variation très importante et encore plus asymétrique de la position du centre instantané de rotation (par rapport à la configuration de la figure 4). Cette configuration différente des précédentes satisfait les critères représentés par le secteur A ainsi que ceux Correspondant au secteur C pour chacune de ses limites C1, C2, C3, C4. Le critère correspondant à la zone B (non représentée) est bien sûr également vérifié puisque sur cet exemple lorsque le carrossage est nul, le centre instantané de rotation se trouve sensiblement sur l'axe vertical Z-Z du repère utilisé.

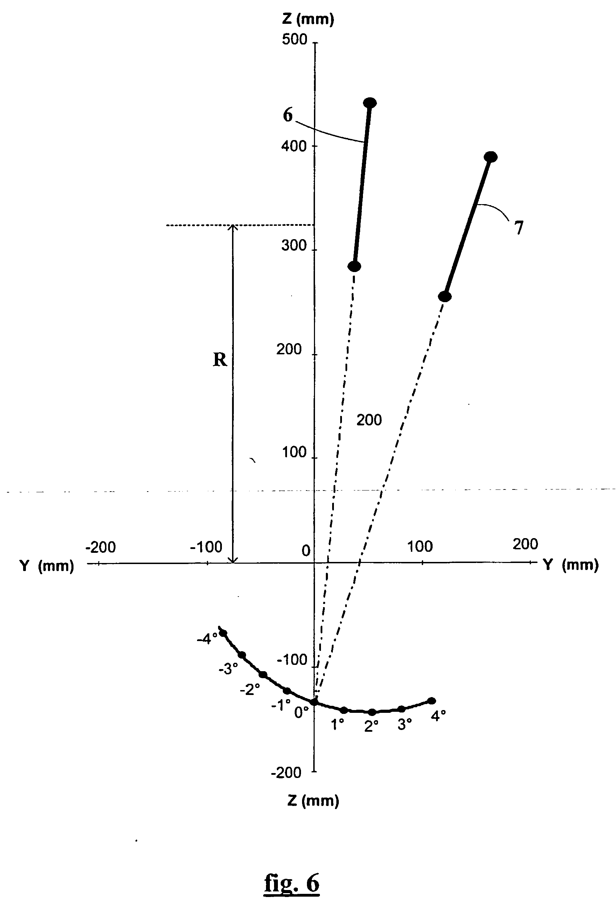

La figure 6 représente encore une autre configuration du dispositif de support de l'invention basée sur des biellettes 6 et 7 dont les entraxes sont respectivement d'environ 160 et 140 mm et un centre instantané de rotation, pour un carrossage nul, situé à une distance sous le sol S d'environ 135 mm. Cette configuration permet d'obtenir une variation de carrossage plus importante sur la roue intérieure au virage. En effet, comme en virage, la roue intérieure est soumise à un effort transversal moins important que la roue extérieure, il peut être intéressant d'avoir une sensibilité en carrossage vis à vis de l'effort transversal plus importante pour les angles de carrossage positifs que pour les angles de carrossage négatifs. Cette sensibilité accrue est obtenue par l'inclinaison de la courbe d'évolution autour de la position de carrossage nul. On voit bien sur cette courbe que la profondeur par rapport au sol du centre instantané de rotation pour un carrossage de 1° est plus importante que pour un angle de carrossage de - 1°. Cette tendance préférée est la tendance inverse de celle des configurations décrites aux figure 4 et 5. La différence de profondeur est encore plus importante si l'on compare les angles de carrossage de 2° et -2° et ainsi de suite jusqu'à 4° et -4°.

Attention, la comparaison directe des graphes des figures 3, 4, 5 et 6 peut être trompeuse car les représentations utilisent des échelles différentes. De plus les différents secteurs sont représentés schématiquement dans le seul but d'illustrer les caractéristiques de l'invention. Leur définition précise ressort des conditions posées sur les coordonnées Y et Z du centre instantané de rotation telles que définies en particulier dans les revendications.

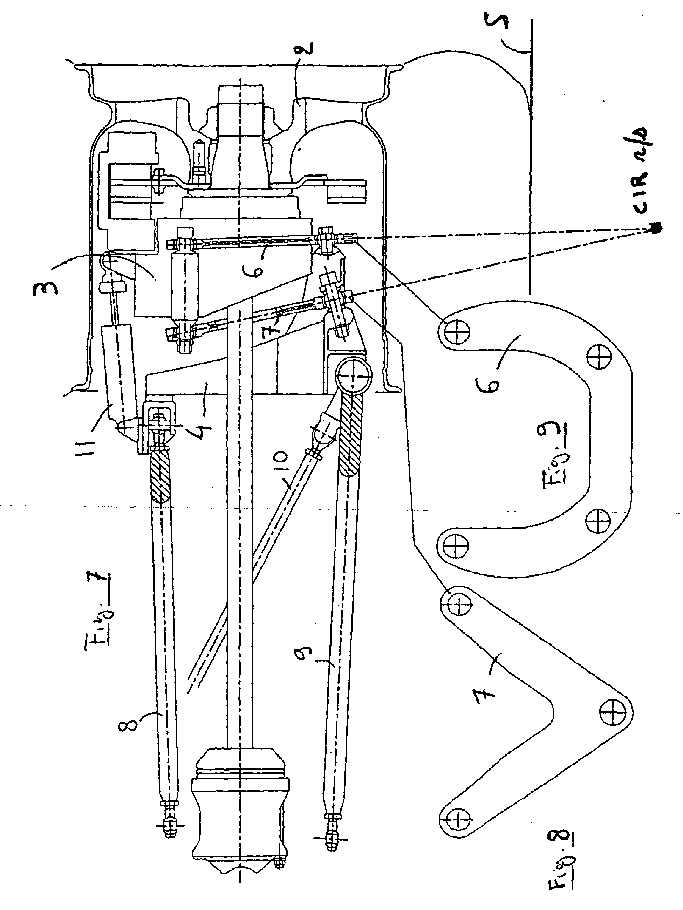

La figure 7 représente un exemple de réalisation d'un système de suspension selon l'invention destiné à un véhicule de compétition automobile. La suspension comprend un triangle supérieur 8 articulé par deux rotules à la caisse (non représentée) et par une rotule au support intermédiaire 4 et un triangle inférieur 9 articulé par deux rotules à la caisse et par une rotule au support intermédiaire 4. La charge est reprise par un poussoir 10 et transmise, de manière connue en soi, à un ressort non représenté. Une biellette de pince (non représentée) contrôle le braquage du support intermédiaire 4 par rapport à la caisse. Le porte-roue 3 est articulé par rapport au support intermédiaire 4 par l'intermédiaire de deux biellettes, une biellette extérieure 6 et une biellette intérieure 7. Les biellettes sont liées de part et d'autre par des rotules définissant des axes ou des points d'articulation. Les axes des biellettes se croisent pour définir le centre instantané de rotation (CIR r/s) à proximité du plan de roue. De préférence, un amortisseur de carrossage 11 contrôle les variations de carrossage en contrôlant la distance entre les parties hautes du porte-roue 3 et du support intermédiaire 4. Un ressort peut être combiné à l'amortisseur 11 afin d'influencer le carrossage par exemple dans le but de maintenir un carrossage statique différent de celui qui résulte uniquement de la configuration, de la charge portée par la roue et de la rigidité du pneumatique.

La figure 8 montre la forme en V de la biellette intérieure 7 qui comporte une rotule inférieure pour sa liaison au support intermédiaire 4 et deux rotules supérieures pour sa liaison au porte-roue 3.

La figure 9 montre la forme en U de la biellette extérieure 6 qui comporte deux rotules inférieures pour sa liaison au support intermédiaire 4 et deux rotules supérieures pour sa liaison au porte-roue 3.

Cette architecture correspond à un mode de réalisation préféré de l'invention lorsqu'elle est appliquée à l'essieu arrière moteur d'un véhicule de compétition automobile. Sur cet exemple, les efforts d'enroulement sont transmis du porte-roue 3 au support intermédiaire 4 par la seule biellette extérieure 6. Alternativement, la biellette intérieure 7 peut être également articulée au support intermédiaire 4 par une liaison pivot (par exemple par deux rotules) afin que les efforts d'enroulement soient repris conjointement par les deux biellettes ce qui peut présenter un avantage sur le plan du dimensionnement. En revanche, le caractère hyperstatique du dispositif augmentant, son fonctionnement sera alors plus sensible à la précision du parallélisme des axes de pivot.

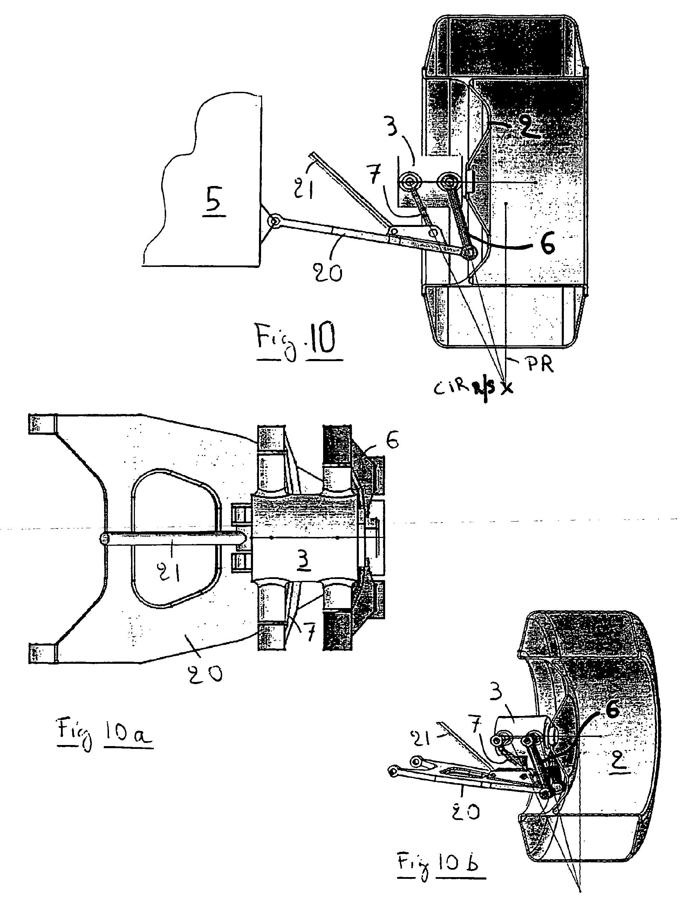

Les figures 10, 10a et 10b représentent schématiquement un dispositif de suspension selon l'invention utilisant le principe (connu en soi) de l'essieu brisé. Le degré de liberté de débattement de suspension est permis par l'oscillation du triangle 20 par rapport à la caisse 5. Un poussoir 21 peut être intercalé entre le triangle 20 et le ressort de suspension (non représenté). Le degré de liberté de carrossage du porte-roue 3 est permis par les biellettes 6 et 7. Ainsi, le triangle inférieur 20 joue le rôle du support intermédiaire 4 (voir figures précédentes) vis à vis du porte-roue 3. On comprend que le débattement de suspension aura ici une influence sensible sur la configuration des biellettes puisque l'inclinaison du triangle varie par rapport à la caisse et au sol lors du débattement de suspension. Dans la mesure où le débattement de suspension est peu important (ce qui est bien souvent le cas sur les véhicules sportifs ou de compétition) cette influence reste acceptable.

Sur cet exemple, la biellette extérieure 6 est en forme de U, de H ou de X, c'est à dire qu'elle comporte deux liaisons pivot (réalisées par exemple par quatre rotules) alors que la biellette intérieure 7 est en forme de V, c'est à dire qu'elle comporte une liaison pivot (avec le porte-roue 3) et une liaison ponctuelle (avec le triangle 20). Sur cet exemple, les efforts d'enroulement sont transmis du porte-roue 3 au triangle inférieur 20 par la biellette extérieure 6. Alternativement, la biellette intérieure 7 peut être également articulée au triangle inférieur 20 par une liaison pivot (par exemple par deux rotules) afin que les efforts d'enroulement soient repris conjointement par les deux biellettes ce qui peut présenter un avantage sur le plan du dimensionnement (voir plus haut).

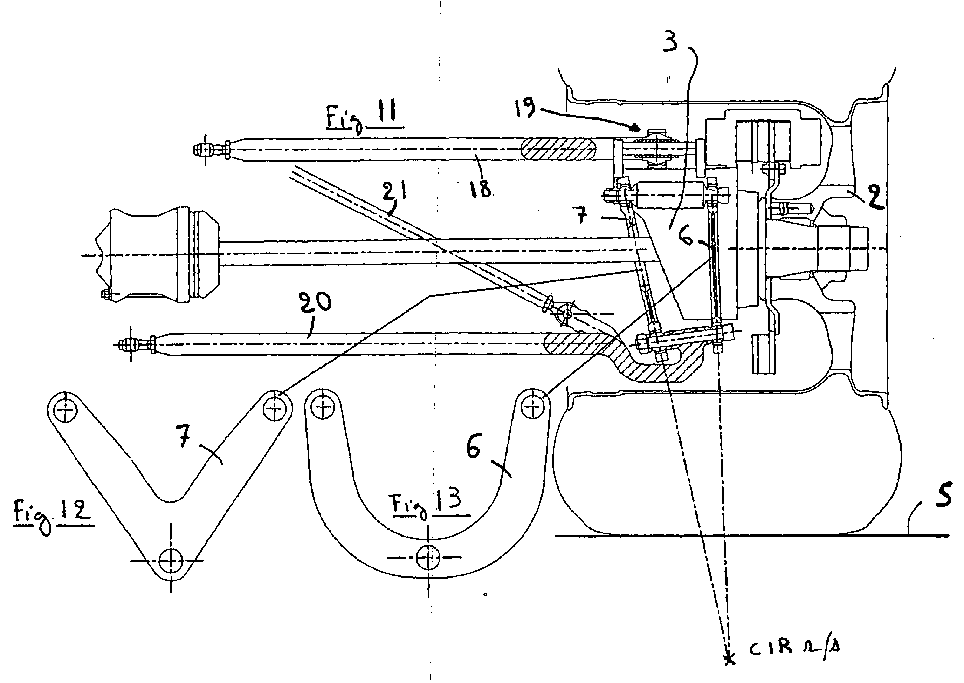

La figure 11 représente une variante intéressante de l'exemple de réalisation des figures 10 à 10b adaptée à l'essieu arrière moteur d'un véhicule de compétition. La différence réside essentiellement dans le fait que les efforts d'enroulements sur le porte-roue 3 sont transmis à la fois par les biellettes 6 et 7 au triangle inférieur 20 et également par une glissière 19 à un triangle 18. Ce triangle 18 est lié à la caisse à la manière d'un triangle de suspension. La glissière articulée 19, orientée transversalement au véhicule, autorise le mouvement de carrossage par son degré de liberté en translation associé à un degré de liberté de rotation parallèlement à l'axe de carrossage. La glissière articulée 19 transmet une partie des efforts d'enroulement du porte-roue 3 au triangle 18 car ces efforts sont orientés perpendiculairement à l'axe de la glissière. Le triangle 18 a donc une toute autre fonction que le triangle supérieur 8 du dispositif de la figure 7 ou d'une suspension conventionnelle. Le triangle 18 permet principalement de réduire les contraintes subies par le triangle inférieur 20 par rapport aux contraintes subies dans le mode de réalisation des figures 10 à 10b. On a représenté ici une liaison glissière 19 à billes mais de nombreuses alternatives sont utilisables.

Un amortisseur de carrossage (non représenté) peut être utilisé dans le même but que pour la figure 7. Cet amortisseur peut être combiné à la glissière 19.

La figure 12 montre la forme en V de la biellette intérieure 7 comportant une rotule inférieure pour sa liaison au triangle inférieur 20 et deux rotules supérieures pour sa liaison au porte-roue 3. La figure 13 montre la forme en V ou en U de la biellette extérieure 6 qui comporte une rotule inférieure pour sa liaison au triangle inférieur 20 et deux rotules supérieures pour sa liaison au porte-roue 3. Cette combinaison est rendue possible du fait de la reprise d'une partie des efforts d'enroulement par le triangle 18.

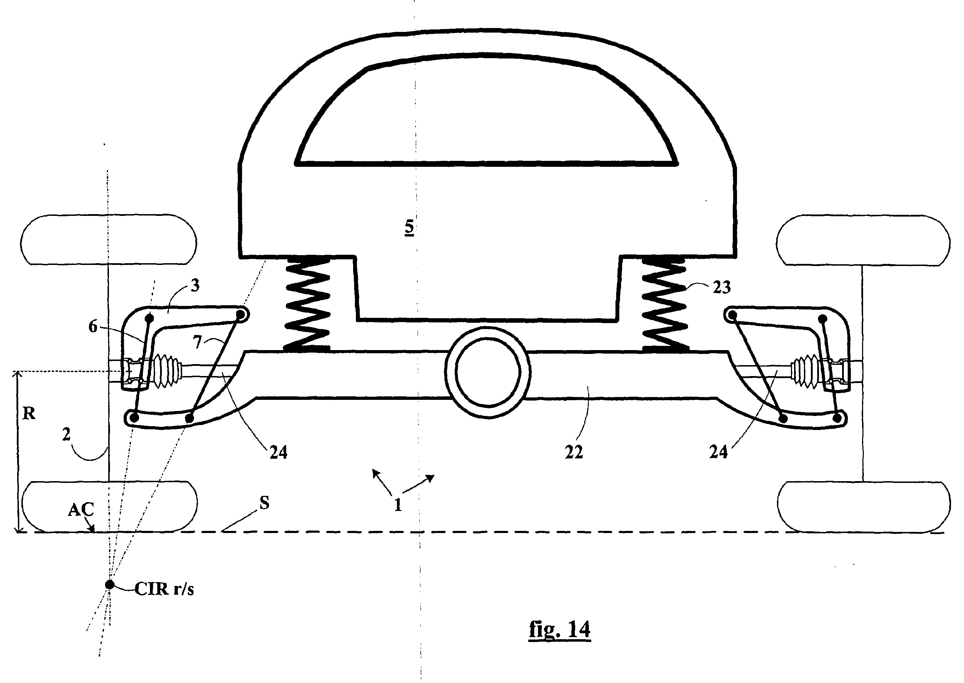

La figure 14 représente schématiquement un véhicule selon l'invention équipé d'un dispositif de suspension selon l'invention. Sur cet exemple, on utilise le principe de suspension (connu en soi) de l'essieu rigide. Le degré de liberté de débattement de suspension est permis par les mouvements de la traverse 22 par rapport à la caisse 5. Des ressorts, ici représentés sous la forme de ressorts hélicoïdaux 23, portent la charge. Le degré de liberté de carrossage du porte-roue 3 est permis par les biellettes 6 et 7. Une caractéristique intéressante de cette combinaison est que la traverse 22 demeure sensiblement parallèle au sol S de sorte que les inclinaisons du porte-roue 3 par rapport à la traverse 22 (qui joue le rôle du support intermédiaire 4 des figures 2 ou 7) correspondent sensiblement aux variations de carrossage de la roue par rapport au sol. Le débattement de suspension n'influence pas la configuration des biellettes. On a représenté ici un essieu rigide moteur (voir les transmissions 24). Le dispositif de suspension de l'invention s'applique naturellement également aux essieux rigides non moteurs.

Les figures 3 à 11 correspondent à des applications de l'invention pour un rayon écrasé R d'environ 320 mm.

Les figures représentent des modes de réalisation particuliers de l'invention dans lesquels le centre instantané de rotation est contenu sensiblement dans le plan de référence PV lorsque le carrossage de la roue est nul (α = 0°), c'est à dire lorsque le plan de roue PR est vertical. On peut, selon l'invention, concevoir des configurations dans lesquels le centre instantané de rotation, pour un carrossage nul, est distant du plan PV. De préférence, le centre instantané de rotation demeure contenu dans la zone B visée. La roue aura alors tendance à adopter, sous charge nominale, un carrossage statique non nul à moins que des mesures correctives soient prises sous la forme par exemple d'un ou plusieurs ressorts. Un autre exemple de mesure corrective peut être une liaison (par exemple mécanique ou hydraulique) entre les deux porte-roues d'un même essieu afin de rendre interdépendants les mouvements de carrossage des deux roues. Un effet supplémentaire d'une telle liaison est qu'elle peut rendre dépendants les mouvements de carrossage non seulement à l'arrêt et en ligne droite mais également en virage.

Une particularité intéressante de l'invention est qu'elle est applicable à tous les schémas de suspensions connus puisque l'on ajoute à ces systèmes existants des éléments supplémentaires permettant un degré de liberté de carrossage en plus du degré de liberté de suspension existant. Par exemple, l'invention peut bien sûr trouver son application sur la base des systèmes de suspension MacPherson ou dérivés comme décrit dans la demande WO 01/72572 et en particulier aux figures 2 et 3 de ce document. Dans ce cas la partie inférieure de la jambe de force constitue le support intermédiaire sur lequel est articulé le porte-roue.

Les articulations des différents éléments du dispositif de support ou du dispositif de suspension de l'invention peuvent être réalisées de diverses manières. Les articulations élastomériques utilisées couramment dans le domaine de la liaison au sol peuvent permettre de simplifier l'obtention de l'équilibre du système car elles introduisent des raideurs déterminées. D'autre part, il est connu qu'elles favorisent le confort du véhicule. Dans le domaine des véhicules de compétition, l'usage des rotules sèches est préféré pour des raisons de précision du guidage, de poids ou d'encombrement. Une alternative intéressante et connue en soi dans le domaine des véhicules de compétition est constituée par l'utilisation de lames composites flexibles.

Afin de vérifier qu'un dispositif de support ou de suspension satisfait à un critère donné concernant la variation de la position de son centre instantané de rotation, on peut utiliser la méthode suivante:
1- déterminer la géométrie du système lorsque la suspension porte sa charge nominale statique, c'est à dire relever la position dans le plan de carrossage des points d'articulation des biellettes, du plan de roue PR, du plan du sol S et mesurer le rayon écrasé R (pour un angle de carrossage nul et un pneumatique à sa pression d'utilisation normale).
2- Construire la courbe d'évolution du centre instantané de rotation dans le plan de carrossage (voir les exemples figures 3 à 6). Ceci peut être fait par exemple de manière théorique à partir de la configuration relevée à l'étape 1. Cela peut également être fait de manière expérimentale en imposant artificiellement la variation de carrossage au porte-roue afin de balayer le débattement de carrossage visée (par exemple de 0° à -3°) et en relevant au fur et à mesure les positions des biellettes pour en déduire ensuite les positions correspondantes du centre instantané de rotation. Pour appliquer la méthode expérimentale, le support intermédiaire (ou le cas échéant le triangle inférieur) doit être maintenu immobile par rapport au sol S et au plan de référence PV par exemple en le fixant sur un banc de mesure (marbre). La roue ou le pneumatique est alors avantageusement démonté(e). Cette méthode expérimentale peut être limitée par la présence de butées ou autres contraintes constructives. Dans ce cas, on doit utiliser la méthode théorique au moins pour la partie non accessible du débattement concerné.
3- comparer graphiquement ou numériquement l'évolution ainsi définie avec les critères (secteurs A et C et zone B) déterminés en fonction du rayon R constaté.

Les différentes configurations géométriques décrites et illustrées en particulier sur les figures 3 à 6 sont naturellement applicables selon l'invention aux différents modes de réalisations possibles, en particulier à ceux illustrés aux figures 7 à 14.

## Revendications

1. Dispositif de support (3, 6, 7) destiné à lier une roue (2) à des éléments de suspension (4, 8, 9, 20, 22) d'un véhicule, ladite roue (2) de rayon 'R' étant destinée à reposer au sol (S), ledit dispositif de support comportant des biellettes (6, 7) articulées en leurs parties inférieures aux éléments de suspension et en leurs parties supérieures au porte-roue (3) conférant à ladite roue un degré de liberté de carrossage par rapport aux dits éléments de suspension, le mouvement de carrossage s'effectuant autour d'un centre instantané de rotation (CIR r/s), ledit dispositif étant **caractérisé en ce qu'**il est configuré en outre de manière à ce que, Y et Z étant respectivement les abscisse et ordonnée de la position instantanée dudit centre instantané de rotation dans le plan de carrossage, ladite position, au cours d'un débattement de carrossage de 0° à -1°, vérifie simultanément les conditions (A) suivantes:
■ *Y≤*0.125**R*
■ *Z* ≤ -0.0625**R*
■ Z ≤ 0.66225**Y +* 0.02028**R*

2. Dispositif selon la revendication 1 configuré de manière à ce que lesdites conditions (A) sont en outre vérifiées au cours d'un débattement de carrossage de 0° à -2°

3. Dispositif selon la revendication 2 configuré de manière à ce que lesdites conditions (A) sont en outre vérifiées au cours d'un débattement de carrossage de 0° à -3°.

4. Dispositif selon la revendication 3 configuré de manière à ce que lesdites conditions (A) sont en outre vérifiées au cours d'un débattement de carrossage de 0° à -4°.

5. Dispositif de support selon l'une des revendications précédentes configuré de manière à ce que la position dudit centre instantané de rotation, pour un carrossage nul, vérifie en outre les conditions (B) suivantes:
■ -0.125**R*<*Y*<0.125**R*
■ *Z* ≤ -0.0625**R*

6. Dispositif de support selon la revendication 5 dans lequel la position dudit centre instantané de rotation, pour un carrossage nul, vérifie en outre la condition (B) suivante:
■ -0.0625**R≤Y≤*0.0625**R*

7. Dispositif de support selon l'une des revendications précédentes, la position dudit centre instantané de rotation, pour un carrossage de -1°, vérifie en outre la condition (C1) suivante:
■ *Z* ≤ 0.66225**Y*-0.15**R*

8. Dispositif de support selon l'une des revendications précédentes, la position dudit centre instantané de rotation, pour un carrossage de -2°, vérifie en outre la condition (C2) suivante:
■ *Z* ≤ 0.66225**Y*-0.1625**R*

9. Dispositif de support selon l'une des revendications précédentes, la position dudit centre instantané de rotation, pour un carrossage de -3°, vérifie en outre la condition (C3) suivante:
■ *Z*≤0.66225**Y*-0.1719**R*

10. Dispositif de support selon l'une des revendications précédentes, la position dudit centre instantané de rotation, pour un carrossage de -4°, vérifie en outre la condition (C4) suivante:
■ *Z* ≤ 0.66225**Y*-0.1844**R*

11. Dispositif de support selon l'une des revendications précédentes, la position dudit centre instantané de rotation, pour un carrossage de -5°, vérifie en outre la condition suivante:
■ *Z* ≤ 0.66225**Y*-0.1969**R*

12. Dispositif de support selon l'une des revendications précédentes configuré de manière à ce que la position dudit centre instantané de rotation pour un carrossage nul vérifie en outre la condition suivante:
■ *Z* ≥ -0.9375**R*

13. Dispositif de support selon l'une des revendications précédentes configuré de manière à ce que la profondeur par rapport au sol du centre instantané de rotation pour un carrossage de 1° est plus importante que pour un de carrossage de - 1°.

14. Dispositif de support selon l'une des revendications précédentes, destiné à être lié à une jambe de force MacPherson.

15. Dispositif de support selon l'une des revendications précédentes, comportant en outre des moyens de contrôle (11) aptes à influencer le carrossage de la roue.

16. Dispositif de support selon la revendication 15, les moyens de contrôles comprenant un amortisseur (11).

17. Dispositif de support selon la revendication 15 ou 16, les moyens de contrôles comprenant un ressort.

18. Dispositif de support selon l'une des revendications précédentes, la biellette intérieure (7) étant liée d'une part au porte-roue 3 par une liaison pivot et d'autre part aux éléments de suspension (4, 20, 22) par une liaison rotule.

19. Dispositif de suspension (1) pour véhicule comprenant le dispositif de support selon l'une des revendications précédentes.

20. Dispositif de suspension (1) selon la revendication 19 comprenant en outre un essieu rigide.

21. Véhicule comprenant un dispositif de suspension (1) selon l'une des revendications 19 ou 20.

## Claims

1. Support device (3, 6, 7) designed to connect a wheel (2) to suspension elements (4, 8, 9, 20, 22) of a vehicle, said wheel (2) of radius 'R' being designed to rest on the ground (S), said support device comprising rods (6, 7) articulated at their lower ends to the suspension elements and at their upper ends to the wheel carrier (3) so as to confer on said wheel a degree of camber freedom relative to said suspension elements, the camber movement taking place around an instantaneous centre of rotation (CIR r/s), said device being **characterised in that** it is also configured in such manner that, Y and Z being respectively the abscissa and ordinate of the instantaneous position of said instantaneous centre of rotation in the camber plane, said position, during a camber deflection from 0° to -1°, simultaneously satisfies the following conditions (A):
■ *Y≤*0.125**R*
■ *Z≤*-0.0625**R*
■ Z ≤ 0.66225**Y*+ 0.02028**R*

2. Device according to Claim 1, configured such that said conditions (A) are also satisfied during a camber deflection from 0° to -2°.

3. Device according to Claim 1, configured such that said conditions (A) are also satisfied during a camber deflection from 0° to -3°.

4. Device according to Claim 1, configured such that said conditions (A) are also satisfied during a camber deflection from 0° to -4°.

5. Support device according to any of the preceding claims, configured such that the position of said instantaneous centre of rotation, at zero camber, also satisfies the following conditions (B):
■ -0.125**R*≤*Y*≤0.125**R*
■ *Z* ≤ -0.0625**R*

6. Support device according to Claim 5, in which the position of said instantaneous centre of rotation, at zero camber, also satisfies the following condition (B):
■ -0.0625 **R*≤*Y*≤0.0625**R*

7. Support device according to any of the preceding claims, in which the position of said instantaneous centre of rotation, at a camber of -1°, also satisfies the following condition (C1):
■ *Z* ≤ 0.66225**Y*-0.15**R*

8. Support device according to any of the preceding claims, in which the position of said instantaneous centre of rotation, at a camber of -2°, also satisfies the following condition (C2):
■ *Z*≤0.66225**Y*-0.1625**R*

9. Support device according to any of the preceding claims, in which the position of said instantaneous centre of rotation, at a camber of -3°, also satisfies the following condition (C3):
■ *Z* ≤ 0.66225**Y*-0.1719**R*

10. Support device according to any of the preceding claims, in which the position of said instantaneous centre of rotation, at a camber of -4°, also satisfies the following condition (C4):
■ *Z* ≤ 0.66225**Y*-0.1844**R*

11. Support device according to any of the preceding claims, in which the position of said instantaneous centre of rotation, at a camber of -5°, also satisfies the following condition:
■ *Z* ≤ 0.66225**Y*-0.1969**R*

12. Support device according to any of the preceding claims, configured such that the position of said instantaneous centre of rotation, at zero camber, also satisfies the following condition:
■ *Z >* -0.9375**R*

13. Support device according to any of the preceding claims, configured such that the depth relative to the ground of said instantaneous centre of rotation at a camber of 1° is greater than at a camber of-1°.

14. Support device according to any of the preceding claims, designed to be connected to a MacPherson strut.

15. Support device according to any of the preceding claims, comprising in addition control means (11) that can influence the camber of the wheel.

16. Support device according to Claim 15, in which the control means (11) comprise a damper.

17. Support device according to Claims 15 or 16, in which the control means comprise a spring.

18. Support device according to any of the preceding claims, in which the inner rod (7) is connected on the one hand to the wheel carrier (3) by a pivot joint and on the other hand to the suspension elements (4, 20, 22) by a swivel joint.

19. Suspension system (1) for a vehicle, comprising the support device according to any of the preceding claims.

20. Suspension system (1) according to Claim 19, also comprising a rigid axle.

21. Vehicle comprising a suspension system (1) according to either of Claims 19 or 20.

## Patentansprüche

1. Tragvorrichtung (3, 6, 7), die dazu bestimmt ist, ein Rad (2) mit Aufhängungselementen (4, 8, 9, 20, 22) eines Fahrzeugs zu verbinden, wobei das Rad (2) mit Radius "R" dazu vorgesehen ist, auf dem Boden (S) zu stehen, wobei die Tragvorrichtung Schwingarme (6, 7) aufweist, die an ihren unteren Teilen an den Aufhängungselementen und an ihren oberen Teilen am Radträger (3) angelenkt sind und dem Rad einen Radsturz-Freiheitsgrad in Bezug auf die Aufhängungselemente verleihen, wobei die Radsturzbewegung um ein momentanes Drehzentrum (CIR R/s) erfolgt, wobei die Vorrichtung **dadurch gekennzeichnet ist, dass** sie außerdem in der Weise konfiguriert ist, dass dann, wenn Y und Z die Abszisse bzw. die Ordinate der momentanen Position des momentanen Drehzentrums in der Radsturzebene sind, die Position im Verlauf des Radsturzausschlags von 0° bis -1° gleichzeitig die folgenden Bedingungen (A) erfüllt:
- Y ≤ 0,125 × R
- Z ≤ -0,0625 × R
- Z ≤ 0,66225 × Y + 0,02028 x R.

2. Vorrichtung nach Anspruch 1, die so konfiguriert ist, dass die Bedingungen (A) auch bei einem Radsturzausschlag von 0° bis -2° erfüllt sind.

3. Vorrichtung nach Anspruch 2, die so konfiguriert ist, dass die Bedingungen (A) auch bei einem Radsturzausschlag von 0° bis -3° erfüllt sind.

4. Vorrichtung nach Anspruch 3, die so konfiguriert ist, dass die Bedingungen (A) auch bei einem Radsturzausschlag von 0° bis -4° erfüllt sind.

5. Tragvorrichtung nach einem der vorhergehenden Ansprüche, die so konfiguriert ist, dass die Position des momentanen Drehzentrums bei einem Radsturz null auch die folgenden Bedingungen (B) erfüllt:
- -0,125 x R ≤ Y ≤ 0,125 x R
- Z ≤ -0,0625 x R.

6. Tragvorrichtung nach Anspruch 5, wobei die Position des momentanen Drehzentrums bei einem Radsturz null auch die folgende Bedingung (B) erfüllt:
- -0,0625 x R ≤ Y ≤ 0,0625 x R.

7. Tragvorrichtung nach einem der vorhergehenden Ansprüche, wobei die Position des momentanen Drehzentrums bei einem Radsturz von -1° auch die folgende Bedingung (C1) erfüllt:
- Z ≤ 0,66225 x Y - 0, 15 x R.

8. Tragvorrichtung nach einem der vorhergehenden Ansprüche, wobei die Position des momentanen Drehzentrums bei einem Radsturz von -2° auch die folgende Bedingung (C2) erfüllt:
- Z ≤ 0,66225 x Y - 0,1625 x R.

9. Tragvorrichtung nach einem der vorhergehenden Ansprüche, wobei die Position des momentanen Drehzentrums bei einem Radsturz von -3° auch die folgende Bedingung (C3) erfüllt:
- Z ≤ 0,66225 x Y - 0,1719 x R.

10. Tragvorrichtung nach einem der vorhergehenden Ansprüche, wobei die Position des momentanen Drehzentrums bei einem Radsturz von -4° auch die folgende Bedingung (C4) erfüllt:
- Z ≤ 0,66225 x Y - 0,1844 x R.

11. Tragvorrichtung nach einem der vorhergehenden Ansprüche, wobei die Position des momentanen Drehzentrums bei einem Radsturz von -5° auch die folgende Bedingung erfüllt:
- Z ≤ 0,66225 x Y - 0,1969 x R.

12. Tragvorrichtung nach einem der vorhergehenden Ansprüche, die so konfiguriert ist, dass die Position des momentanen Drehzentrums bei einem Radsturz null auch die folgende Bedingung erfüllt:
- Z ≥ -0,9375 x R.

13. Tragvorrichtung nach einem der vorhergehenden Ansprüche, die so konfiguriert ist, dass die Tiefe in Bezug auf den Boden des momentanen Drehzentrums bei einem Radsturz von 1° größer als bei einem Radsturz von
-1° ist.

14. Tragvorrichtung nach einem der vorhergehenden Ansprüche, die dazu vorgesehen ist, mit einem MacPherson-Federbein verbunden zu werden.

15. Tragvorrichtung nach einem der vorhergehenden Ansprüche, die außerdem Steuermittel (11) enthält, die dazu ausgelegt sind, den Radsturz des Rades zu beeinflussen.

16. Tragvorrichtung nach Anspruch 15, wobei die Steuermittel einen Stoßdämpfer (11) enthalten.

17. Tragvorrichtung nach Anspruch 15 oder 16, wobei die Steuermittel eine Feder enthalten.

18. Tragvorrichtung nach einem der vorhergehenden Ansprüche, wobei der untere Schwingarm (7) einerseits mit dem Radträger (3) über eine Schwenkverbindung und andererseits mit den Aufhängungselementen (4, 20, 22) über eine Kugelgelenkverbindung verbunden ist.

19. Aufhängungsvorrichtung (1) für Fahrzeug, die die Tragvorrichtung nach einem der vorhergehenden Ansprüche enthält.

20. Aufhängungsvorrichtung (1) nach Anspruch 19, die außerdem eine starre Achse enthält.

21. Fahrzeug, das eine Aufhängungsvorrichtung (1) nach einem der Ansprüche 19 oder 20 enthält.
